# EUROPEAN PATENT SPECIFICATION

(11) **EP 2 424 652 B1**
(45) Date of publication and mention of the grant of the patent: **25.10.2017**
(21) Application number: 10722025.3
(22) Date of filing: 29.04.2010
(51) Int. Cl.: B01J 8/02, C07C 45/38, C07C 47/04

(54) **CATALYST REACTION APPARATUS AND PROCESS**
VORRICHTUNG UND VERFAHREN FÜR KATALYSATORREAKTION
APPAREIL ET PROCÉDÉ DE RÉACTION CATALYTIQUE

(30) Priority: 01.05.2009 GB 0907502
(43) Date of publication of application: 07.03.2012
(73) Proprietor: Dynea AS, 2001 Lilleström (NO)
(72) Inventor: NERDAL, Geir, N-2003 Lillestrøm (NO); SCHØNSBY, Hans, N-2013 Skjetten (NO)
(74) Representative: Hoyng Rokh Monegier LLP
(86) International application number: PCT/EP2010/055873
(87) International publication number: WO 2010/125169

(56) References cited:
- WO-A1-00/33952
- WO-A1-01/53430
- WO-A2-2006/009787
- US-A- 3 711 253

## Description

### BACKGROUND OF THE INVENTION

### 1. Field of the Invention

The invention relates generally to an apparatus for carrying out catalysed reactions, in particular exothermic reactions, more in particular the catalytic formation of formaldehyde. The invention also relates to a process of carrying out catalytic reactions, in particular exothermic reactions, more in particular the catalytic formation of formaldehyde.

### 2. Description of the Related Art

For exothermic catalytic reactions it is often necessary to quickly and effectively remove heat from the reaction system because high temperatures can lead to unwanted side reactions and to secondary reactions of products into impurities. This leads to wasted reactants and to a reduction in the purity of the desired product.

These problems are of particular concern in the production of formaldehyde by the catalysed reactions:

CH₃OH + ½O₂ → CH₂O + H₂O

and

CH₃OH → CH₂O + H₂

In this reaction, methanol vapour and air are contacted with a catalyst bed maintained at a temperature in the region of 550°C to 700 °C. At these high temperatures (which must be controlled because of the exothermic nature of the reaction) formaldehyde may be broken down by secondary reaction mainly to CO, C02 at the cost of the overall formaldehyde yield. Since these secondary reactions may take place downstream of the catalyst, it is extremely important to cool the product stream as quickly as possible, preferably to a temperature of 300°C or below, within 60 milliseconds or less.

WO 01/53430 A1 relates to an apparatus for conversion of a hydrocarbon feed stream into a liquid product stream comprising: a pressure vessel comprising: a synthesis gas production device; a synthesis gas conditioning device in fluid communication with the synthesis gas production device; and a synthesis gas conversion device in fluid communication with the synthesis gas conditioning device, wherein the synthesis gas production device and the synthesis gas conditioning device are nested within the synthesis gas conversion device.

WO 2006/009787 A2 relates to a device, comprising: a heat exchanger having an inlet, an outlet, and a conduit between the inlet and the outlet, the heat exchanger being adapted to allow a flow of a first fluid inside the conduit and to establish a heat exchange relationship between the first fluid and a second fluid flowing outside the conduit; and a sprayer coupled to the outlet of the heat exchanger for spraying the first fluid exiting the heat exchanger into the second fluid.

An example of a known catalyst reaction apparatus is found in patent application number WO00/33952 (Linzer et al.), the entire contents of which is hereby incorporated by reference. Discussed therein is a formaldehyde reaction vessel that is adapted to cool a product stream very quickly and hence reduce as far as possible the secondary reactions and loss of formaldehyde. The rapid cooling is purported to be achieved by a cooling section made up of a bed of horizontally aligned water/steam cooling pipes immediately downstream of the catalyst bed. Although such an apparatus is effective to achieve rapid cooling, it is a problem with such currently used cooling pipe constructions that the high temperatures, pressures (10 - 40 bar / 10⁵ - 40⁵ pa), and rapid variations therein, may lead to failures in the cooling section. The cooling sections are also difficult and expensive to replace (construction costs and reactor downtime).

Thus, there exists a need for a catalyst reaction apparatus and method that offers adequate cooling capabilities, but that is resistant to failures (in particular to thermal stress failures) and is easily replaceable or reparable. It is preferable that a cooling section of such an apparatus should be able to offer high heat transfer coefficients to achieve the desirably rapid cooling of from 550-700°C to 300°C or less in 60 milliseconds or quicker (more preferably 30 milliseconds or quicker).

Another concern that exists with catalytic reactors is that the reactants must be evenly and well distributed over the catalyst bed of such a reactor. This is to ensure the equal usage of the whole of the catalyst surface, optimising the efficiency of the catalyst bed, and also avoiding temperature variations, and uneven deactivation of the catalyst bed. This is a particular difficulty in circumstances where an apparatus for cooling of product streams must be provided because the cooling components limit space and access.

In WO0/33952 this concern is addressed by locating the reactants inlet port centrally above the catalyst bed. This is considered to be effective for achieving reactant distribution to the catalyst bed. However, such location of the inlet port raises the problem of connection of the reactant inflow passage to the lid of the reactor, requiring special adaptation and procedures to allow opening of the reactor lid, possibly including disconnection of the reactant inflow passage. An alternative to provision of the inflow port in the reactor lid is to provide the port through the side of the reactor. However, although this allows easier opening of the lid, such a configuration leads to difficulties in distribution of the reactants, and also complicates access to the catalyst bed for maintenance and replacement.

Thus, there exists a need for a catalyst reactor apparatus and method that gives a good distribution of reactants to a catalyst bed, while at the same time allowing easy internal access.

A further concern that exists with catalytic reactors, particularly for reactors adapted to effect catalytic reactions at elevated temperatures, for example at temperatures above 150°C, especially in the region of 500°C and above, is the use of reactant pre-heater units. It is the case that a great efficiency of a catalysed reaction is often achieved by preheating the reactants to a beneficial catalyst reaction temperature. This is known and is typically achieved by use of a pre-heater unit (e.g. a steam preheater) that preheats the reactants before they are fed to the catalytic reactor apparatus. The use of such preheaters is costly and space consuming.

Thus there exists a need for a catalytic reactor apparatus and method that overcomes the above-mentioned problems associated with the use of preheaters.

Further there exists a need for a catalytic reactor apparatus and method that addresses one, more, or preferably all of the above-mentioned problems.

According to one embodiment of the invention there is provided a formaldehyde production plant according to claim 1.

By construction of the heat exchanger section in accordance with the above, the reactor apparatus is much less susceptible to failures as a result of thermal stress, and even if failures should occur, it is more easy to repair the apparatus, for example by replacement of the heat exchange pipe. The apparatus may also be more easily constructed because of a considerable reduction of the number of welds associated with the heat exchanger section.

The heat exchange pipe is formed as a jointless unit between its inlet and outlet. In the present specification jointless refers to a lack of, for example: non-disconnectable joints, e.g. soldered, welded, adhered, or caulked joints; screw-threaded joints; joints in which sealing surfaces are pressed together by means of a member, e.g. a swivel nut, screwed on, or into, one of the joint parts; joints with sleeve or socket; and flanged joints; that join two or more separate pipes together.

The term jointless does not exclude pipes that include seams running a part or all of their length. Such seams are for example found in steel pipes formed by rolling a strip of steel into pipe form and attaching the longitudinal pipe edges together by for example welding to form a seam.

The heat exchange pipe may be connected to further components of the heat exchanger section at its inlet and outlet. These connections may take the form of welds or releasable mechanical connections to further piping or to heat exchange media containers. In particular the heat exchange section preferably further comprises at least one heat exchange media container for holding heat exchange media (e.g. water and steam), connected to the heat exchange piping; and a pump for forcing the heat exchange media along the heat exchange piping.

In use, reactants (e.g. typically gases, but other flowable reactants may be used), are provided from the reactant inlet to the catalyst bed where the catalysed reaction takes place. The products of the catalysed reaction then pass to the heat exchange section where they are cooled to stop side and secondary reactions. The heat exchange section is thus preferably down-stream, more preferably immediately down-stream, of the catalyst bed, or reaction zone, of the apparatus. It is preferably effective to cool the products of the reaction achieved at the catalyst bed, or reaction zone, once the products have left the catalyst bed or reaction zone of the apparatus. Should the apparatus have one or more consecutive catalyst beds that form a reaction zone, the heat exchange section is located downstream of the last catalyst bed, i.e. downstream of the reaction zone. More preferably the heat exchange pipe does not extend into the catalyst bed or reaction zone, and most preferably has a minimal or no direct effect on controlling the temperature of the catalyst bed or reaction zone. The temperature of the catalyst bed or reaction zone of the present invention is most preferably (primarily) controlled via control of the rate of the exothermic reaction at the catalyst bed or in the reaction zone.

After the heat exchange section an optional further product cooling step may take place, after which the product passes to the product outlet.

An aspect of the invention resides in a method of carrying out a catalytic reaction comprising providing an apparatus as discussed above, and carrying out the steps of; i) passing one or more reactants along the reactant inflow pipe and through the reactant inlet to the catalyst bed; ii) contacting the one or more reactants with a catalyst bed to form a product; ii) contacting the product of step ii) with the coil part of the heat exchange pipe through which heat exchange media is flowing.

The method is a method of forming formaldehyde, and comprises preferably the steps of; ii) contacting methanol and an oxygen source with a silver-catalyst bed at a temperature between 550 and 700°C; and iii) contacting the product of step ii) with the coil part of the heat exchange pipe.

To aid access and replaceability of the heat exchange pipe, the pipe is conveniently placed with the coil about an axis substantially perpendicular to the plane of the lid of the reactor vessel, and/or the catalyst bed.

In a preferred embodiment the catalyst bed is provided as a porous plate aligned perpendicular to the main axis of the reaction vessel, and preferably also substantially parallel to the lid of the reactor vessel. To aid an even distribution of reactants over the catalyst, such an alignment is also preferably horizontal. The coils of the heat exchange pipe are then preferably aligned about an axis perpendicular to the plane of the catalyst.

The coils of the heat exchange pipe are advantageously located immediately downstream of the catalyst bed so as to achieve cooling of the product stream as soon as possible after the reaction. In a preferred construction, the catalyst is located such that it sits on, or is in some other way in direct contact, with the coils. This helps to immediately cool the products, and may also be useful to remove heat from the catalyst during exothermic reactions.

In a preferred embodiment the coil part of the heat exchange pipe is a helix. That is, inline with the general meaning of helix, curved in a shape such as it would assume if wound in a layer around and along a cylinder. Such a cylinder typically has a circular or curved cross-section, but it will be clear that other cross-sectional shapes may be used, including multi-faceted shapes, while still achieving the invention. However, it is most preferred that the helix is an oval-helix (i.e. curved in a shape such as it would assume if wound in a layer around and along a cylinder of oval or elliptical cross-section), and more preferably is a circular helix (i.e. curved in a shape such as it would assume if wound in a layer around and along a cylinder of circular cross-section).

In an alternative to the helical embodiment, the coil part of the heat exchange pipe may be a spiral, preferably a planar spiral. However, this embodiment is less preferred because of greater difficulty in repair and replacement of the heat exchange pipes, especially if a plurality of stacked spiral coils is provided.

It is preferred that the heat exchanger section comprises a plurality of similar heat exchange pipes, and that the coil parts of the heat exchange pipes are arranged to form a matrix of heat exchange piping. Preferably the coil parts of the heat exchange pipes form a hollow core for the reactant inflow pipe.

When the coil parts of the heat exchange pipes are helical, the helices are conveniently nested, preferably concentrically. To achieve this, helices are, at least partially, concentrically fitted within helices of larger diameter(s). By making use of helices that have a constant diameter along their major axis, replacement and repair operations have been considerably improved by a reduction in cutting and welding, especially on-site cutting and welding.

It has been found that coils and coil matrixes of 3 to 20, more preferably 6 to 16, and most preferably 8 to 14 coil layers are effective and convenient. However, the number of coil layers is ultimately determined by the desired capacity of the reactor. When in the form of a helix, the coil layers are measured as the number of windings in the helix. When in the form of a spiral the coil layers are measured as the number of stacked spirals.

Each coil part of the heat exchange pipe comprises at least one winding. However, preferably each heat exchange pipe comprises 3 or more windings, preferably 6 or more windings, and most preferably 8 or more windings. Preferably each heat exchange pipe comprises 20 or fewer windings, more preferably 16 or fewer windings, and most preferably 14 or fewer windings.

The heat exchange pipes are preferably formed of stainless steel, in particular stainless steel AISI 316 or equivalent. Other suitable materials include duplex steel, and carbon steel tubing

As discussed above in one aspect of the invention the apparatus comprises a hollow core formed by the coil part of the heat exchange pipe, or matrix of heat exchange piping, in which a reactant inflow pipe is located, leading to the reactant inlet.

A significant advantage of this arrangement is that the reactant(s) pass through the core formed by the heat exchange coils and are thereby preheated internally of the reactor vessel. This reduces, or may even eliminate, the need for additional external preheating devices, and also makes use of wastage heat from the reactant cooling process.

Preferably the wall of the reactant inflow pipe is in direct contact with the coils at the edge of the hollow core.

Usefully in combination with this embodiment, the reactant inflow pipe passes through the catalyst bed from the product side to the reactant side thereof, and leads to the reactant inlet. Advantageously, this not only allows preheating of the reactants to take place in the reactant inflow pipe, but also allows location of the reactant inlet centrally upstream of the catalyst bed for good reactant distribution. It also advantageously removes the need to lead reactant inflow piping to the catalyst via the lid of the reaction vessel. This makes opening of the lid less time consuming, and hence repair and inspection of the catalyst and other components easier and less expensive. This advantage is strongly felt in large diameter (>2.5m) catalyst beds.

Preferably, the coil part or parts in the heat exchanger unit have a narrow pitch. Pitch is the distance between adjacent windings in a spiral or a helix. The pitch is preferably 10 mm or less, more preferably 8 mm or less, and most preferably 6 mm or less. The pitch is also preferably at least 1 mm, more preferably at least 2 mm, and most preferably at least 5 mm. Preferably the pitch is in a range of 1 to 10 mm, more preferably in a range of 2 to 8 mm, and most preferably in a range of 3 - 6 mm. A narrow pitch construction ensures high heat transfer coefficients from the product gas and hence a fast cooling.

The heat exchange section is effective to cool the products of the reaction achieved at the catalyst bed, or reaction zone, once the products have left the catalyst bed or reaction zone of the apparatus. Should the apparatus have one or more consecutive catalyst beds that form a reaction zone, the heat exchange section is located downstream of the last catalyst bed, i.e. downstream of the reaction zone. More preferably the heat exchange pipe does not extend into the catalyst bed or reaction zone, and most preferably has a minimal or no direct affect on controlling the temperature of the catalyst bed or reaction zone. The temperature of the catalyst bed or reaction zone of the present invention is most preferably (primarily) controlled via control of the rate of the exothermic reaction at the catalyst bed or in the reaction zone.

An additional aspect of this embodiment of the invention resides in a method according to claim 11.

As will be readily apparent the various features of the apparatus, particularly the preferred features of the helix and spiral coil forms discussed above, apply equally to this embodiment of the invention independently of the provision of a hollow core with a reactant inflow pipe located therein.

The catalytic reaction apparatus according to any of the embodiments of the invention is used for the production of formaldehyde. The apparatus is connected to a source of methanol and oxygen reactants, and the catalyst bed preferably comprises a silver catalyst.

### BRIEF DESCRIPTION OF THE DRAWINGS

The features and advantages of the invention will be appreciated upon reference to the following drawings, in which:
FIG. 1 is a schematic cross-section of a catalyst reaction apparatus;
FIG. 2 is a perspective view showing a heat exchanger section of a catalyst reaction apparatus

### DESCRIPTION OF ILLUSTRATIVE EMBODIMENTS

The following is a description of certain embodiments of the invention, given by way of example only and with reference to the drawings.

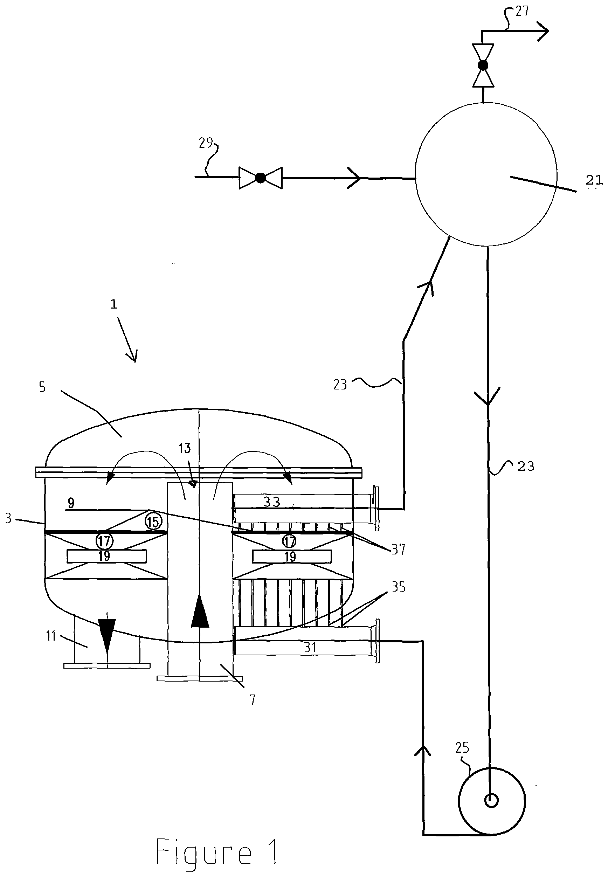

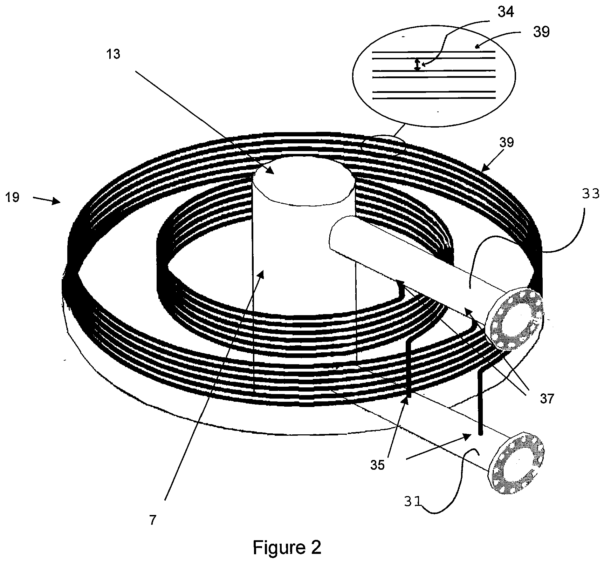

As illustrated in figure 1 there is provided a catalyst reaction apparatus 1 provided with a reaction vessel 3, a lid 5, a reactant inflow pipe 7, a catalyst bed 9, and a product outflow pipe 11. The reactant inflow pipe 7 is provided with a reactant inlet 13 at its upper end. The reactant inlet 13 is located centrally in the catalyst bed 9, and on a reactant side 15 thereof. Directly beneath the catalyst bed 9 and on a product side 17 thereof, are provided heat exchange coils 19 for cooling the product formed on the catalyst. These are illustrated in more detail in figure 2.

A water/steam distribution unit is connected with the heat exchange coils and is provided with a steam drum 21, distribution lines 23, and a pump 25 for circulating the water and steam. Steam may be removed from the system by steam outlet line 27, and fresh water may be added via water inlet line 29. Steam/condensate is provided to the heat exchange coils 19 via steam/condensate inlet 31, and steam/condensate is withdrawn from the heat exchange coils 19 via steam/condensate outlet 33.

For forming formaldehyde the provided catalyst bed 9 is provided with a silver catalyst, and methanol and air sources are connected to the reactant inflow line. The catalyst is heated to a temperature between 550 and 700°C and the reactants flow therethrough to form formaldehyde. The formaldehyde gas then flows over the heat exchange coils to be cooled, and then to the product outflow pipe 11. Advantageously, as the reactants flow along the inflow pipe 7, they are preheated by the heat of the product flow and the heat of the exchange coils 19.

During the reaction process, water is pumped from steam drum 21, along lines 23 and into the heat exchange coils. The water rapidly absorbs the heat from the product and transitions to steam which then returns to the steam drum 21.

Illustrated in figure 2 are heat exchange pipes formed from jointless single unit pipes defined by a pipe inlet 35 and a pipe outlet 37. A part of the length of the heat exchange pipe is a coil 19 having a plurality of windings 39. In figure 2, two heat exchange pipes are provided, each having circular-helix portions. The coil portions each have different helix-diameters and are thereby concentrically nested together about their major axis..

The windings 39 in each coil portion are spaced from one another by a pitch 34 that is from 3 to 6 mm. The spacing may vary within these limits along the length of the windings 39.

In the illustrated embodiment, each of the two heat exchange coils 19 is provided with six windings, giving the shown coil matrix six coil layers.

In use the embodiment of figure 2 is provided with a catalyst bed 9 (shown in figure 1) between the reactant inlet 13 and the heat exchange coils 19, so that the reactants contact the catalyst bed.

In alternative embodiments (not shown) more than two heat exchange coils can be provided in nested configuration. Each of the coils can be nested with the same or different radial separation from its adjacent coils.

## Claims

1. A formaldehyde production plant comprising a catalyst reaction apparatus (1); a methanol storage unit; and a formaldehyde storage unit, wherein
the catalyst reaction apparatus (1) comprising:
a reactant inflow pipe (7) leading to a reactant inlet (13);
a catalyst bed (9);
a heat exchanger section ; and
a product outlet;
wherein the heat exchanger section is down-stream of the catalyst bed and comprises a heat exchange pipe, through which heat exchange media can flow, extending between a pipe-inlet (35) and a pipe-outlet (37) as a jointless unit, at least a part of the heat exchange pipe being a coil (19), the coil part of the heat exchange pipe forming a hollow core in which the reactant inflow pipe is located.

2. The plant according to claim 1, wherein the coil part of the heat exchange pipe is a helix.

3. The plant according to claim 1, wherein the coil part of the heat exchange pipe is a spiral, preferably a planar spiral.

4. The plant according to any of the preceding claims, wherein the heat exchanger section comprises a plurality of similar heat exchange pipes, and the coil parts of the heat exchange pipes are arranged to form a matrix of heat exchange piping.

5. The plant according to claim 4, wherein the coil part of each heat exchange pipe is a helix and the helices are nested, preferably concentrically nested.

6. The plant according to any of the preceding claims, wherein the coil part or parts in the heat exchanger unit have a narrow pitch (34), preferably 10 mm or less, more preferably 8 mm or less, and most preferably 6 mm or less; preferably at least 1 mm, more preferably at least 2 mm, and most preferably at least 5 mm; and preferably the pitch is in a range of 1 to 10 mm, more preferably in a range of 2 to 8 mm, and most preferably in a range of 3 to 6 mm.

7. The plant according to any of the preceding claims, wherein the reactant inlet; catalyst bed; heat exchange pipe; and product outlet; are arranged in a reaction flow path, so that when in use at least one reactant can pass from the reactant inlet to the catalyst bed; and a product of a reaction at the catalyst bed can pass to the heat exchange pipe and then to the product outlet.

8. The plant according to any of the preceding claims wherein the reactant inflow pipe passes through the catalyst bed from a product side to a reactant side thereof.

9. The plant according to any of the preceding claims, wherein the apparatus is connected to a source of methanol and oxygen.

10. The plant according to any of the preceding claims, wherein the catalyst bed comprises a silver catalyst.

11. A method of carrying out a catalytic reaction wherein formaldehyde is formed comprising providing a plant in accordance with any of claims 1 to 10, and the steps of;
i) passing one or more reactants along the reactant inflow pipe and through the reactant inlet to the catalyst bed
ii) contacting the one or more reactants with the catalyst bed to form a product;
iii) contacting the product of step ii) with the coil part of the heat exchange pipe through which heat exchange media is flowing.

12. The method of claim 11, wherein formaldehyde is formed, comprising the steps of;
i) passing at least one of methanol and an oxygen source along the reactant inflow pipe and through the reactant inlet;
ii) contacting methanol and an oxygen source with the catalyst bed, wherein the catalyst is a silver-catalyst bed at a temperature between 550 and 700°C;
iii) contacting the product of step ii) with the coil part of the heat exchange pipe.

## Patentansprüche

1. Formaldehyd-Produktionsanlage, die eine Katalysatorreaktionsvorrichtung (1); eine Methanol-Speichereinheit; und eine Formaldehyd-Speichereinheit umfasst, wobei die Katalysatorreaktionsvorrichtung (1) Folgendes umfasst:
ein Reaktanteneinströmrohr (7), das zu einem Reaktanteneinlass (13) führt;
ein Katalysatorbett (9);
einen Wärmetauscherabschnitt;
und einen Produktauslass;
wobei sich der Wärmetauscherabschnitt stromabwärts des Katalysatorbetts befindet und ein Wärmetauscherrohr umfasst, durch welches Wärmetauschmedien strömen können, das sich zwischen einem Rohreinlass (35) und einem Rohrauslass (37) als fugenlose Einheit erstreckt, wobei zumindest ein Teil des Wärmetauscherrohres eine Spule (19) ist, wobei der Spulenteil des Wärmetauscherrohres einen Hohlkern bildet, in dem sich das Reaktanten-Einströmrohr befindet.

2. Anlage nach Anspruch 1, wobei der Spulenteil des Wärmetauscherrohres eine Spirale ist.

3. Anlage nach Anspruch 1, wobei der Spulenteil des Wärmeaustauscherrohres eine Spirale, vorzugsweise eine ebene Spirale ist.

4. Anlage nach einem der vorherigen Ansprüche, wobei der Wärmetauscherabschnitt eine Vielzahl von ähnlichen Wärmetauscherrohren aufweist und die Spulenteile der Wärmetauscherrohre angeordnet sind, um eine Matrix aus Wärmetauscherrohren zu bilden.

5. Anlage nach Anspruch 4, wobei der Spulenteil jedes Wärmetauscherrohres eine Spirale ist und die Spiralen verschachtelt, vorzugsweise konzentrisch verschachtelt sind.

6. Anlage nach einem der vorherigen Ansprüche, wobei das Spulenteil oder die -teile in der Wärmetauschereinheit einen schmalen Abstand (34), vorzugsweise 10 mm oder weniger, besonders bevorzugt 8 mm oder weniger und insbesondere 6 mm oder weniger aufweisen; vorzugsweise mindestens 1 mm, besonders bevorzugt mindestens 2 mm und insbesondere mindestens 5 mm; und der Abstand vorzugsweise in einem Bereich von 1 bis 10 mm liegt, besonders bevorzugt in einem Bereich von 2 bis 8 mm und insbesondere in einem Bereich von 3 bis 6 mm.

7. Anlage nach einem der vorherigen Ansprüche, wobei der Reaktanteneinlass; das Katalysatorbett; das Wärmetauscherrohr; und der Produktauslass in einem Reaktionsströmungsweg angeordnet sind, so dass bei Verwendung mindestens ein Reaktant vom Reaktanteneinlass zum Katalysatorbett gelangen kann; und ein Produkt einer Reaktion am Katalysatorbett zum Wärmetauscherrohr und dann zum Produktauslass gelangen kann.

8. Anlage nach einem der vorherigen Ansprüche, wobei das Reaktanteneinströmrohr das Katalysatorbett von einer Produktseite zu einer Reaktantenseite desselben durchläuft.

9. Anlage nach einem der vorherigen Ansprüche, wobei die Vorrichtung mit einer Quelle von Methanol und Sauerstoff verbunden ist.

10. Anlage nach einem der vorherigen Ansprüche, wobei das Katalysatorbett einen Silberkatalysator umfasst.

11. Verfahren zur Durchführung einer katalytischen Reaktion, bei der Formaldehyd gebildet wird, welches das Bereitstellen einer Anlage nach einem der Ansprüche 1 bis 10 und die folgenden Schritte umfasst:
i) Durchleiten eines oder mehrerer Reaktanten entlang des Reaktanteneinströmrohrs und durch den Reaktanteneinlass zum Katalysatorbett
ii) in Kontakt bringen des einen oder der mehreren Reaktanten mit dem Katalysatorbett, um ein Produkt zu bilden;
iii) in Kontakt bringen des Produkts aus Schritt ii) mit dem Spulenteil des Wärmetauscherrohrs, durch das Wärmetauschmedium fließt.

12. Verfahren nach Anspruch 11, bei dem Formaldehyd gebildet wird, das die folgenden Schritte umfasst:
i) Durchleiten von mindestens Methanol und/oder einer Sauerstoffquelle entlang des Reaktanteneinströmrohrs und durch den Reaktanteneinlass;
ii) in Kontakt bringen von Methanol und einer Sauerstoffquelle mit dem Katalysatorbett, wobei der Katalysator ein Silber-Katalysatorbett bei einer Temperatur zwischen 550 und 700 °C ist;
iii) in Kontakt bringen des Produkts aus Schritt ii) mit dem Spulenteil des Wärmetauscherrohres.

## Revendications

1. Usine de production de formaldéhyde comprenant un appareil de réaction catalytique (1) ; une unité de stockage de méthanol ; et une unité de stockage de formaldéhyde, dans laquelle
l'appareil de réaction de catalyseur (1) comprenant :
une conduite d'amenée de réactif (7) menant à une entrée de réactif (13) ;
un lit de catalyseur (9) ;
une section échangeur de chaleur ; et
une sortie de produit ;
dans lequel la section échangeur de chaleur est en aval du lit de catalyseur et comprend un tube d'échange de chaleur, à travers lequel peut s'écouler un milieu d'échange de chaleur, s'étendant entre une entrée de tube (35) et une sortie de tube (37) en tant qu'unité sans joints, au moins une partie du tube d'échange de chaleur étant une bobine (19), la partie de bobine du tube d'échange de chaleur formant un noyau creux dans lequel se situe la conduite d'amenée du réactif.

2. Usine selon la revendication 1, dans laquelle la partie de bobine du tube d'échange de chaleur consiste en une hélice.

3. Usine selon la revendication 1, dans laquelle la partie de bobine du tube d'échange de chaleur consiste en une spirale, de préférence en une spirale plane.

4. Usine selon l'une quelconque des revendications précédentes, dans laquelle la section échangeur de chaleur comprend une pluralité de tubes d'échange de chaleur similaires, et les parties de bobine des tubes d'échange de chaleur sont agencées pour former une matrice de tubes d'échange de chaleur.

5. Usine selon la revendication 4, dans laquelle la partie de bobine de chaque tube d'échange de chaleur consiste en une hélice et les hélices sont imbriquées, de préférence imbriquées de manière concentrique.

6. Usine selon l'une quelconque des revendications précédentes, dans laquelle la partie de bobine ou les parties de bobine dans l'unité échangeur de chaleur possèdent un pas étroit (34), de préférence de 10 mm ou moins, plus préférablement de 8 mm ou moins, et encore plus préférablement de 6 mm au moins ; de préférence d'au moins 1 mm, plus préférablement d'au moins 2 mm, et encore plus préférablement d'au moins 5 mm ; et de préférence le pas est dans la gamme comprise entre 1 et 10 mm, plus préférablement dans la gamme comprise entre 2 et 8 mm, et encore plus préférablement dans la gamme comprise entre 3 et 6 mm.

7. Usine selon l'une quelconque des revendications précédentes, dans laquelle l'entrée de réactif; le lit de catalyseur ; le tube d'échange de chaleur ; et la sortie de produit ; sont agencés dans une voie d'écoulement de réaction, de sorte que lorsqu'ils sont utilisés au moins un réactif peut passer à partir de l'entrée de réactif vers le lit de catalyseur; et un produit d'une réaction au niveau du lit de catalyseur peut passer par le tube d'échange de chaleur et ensuite par la sortie de produit.

8. Usine selon l'une quelconque des revendications précédentes, dans laquelle la conduite d'amenée de réactif passe à travers le lit de catalyseur depuis un côté de produit vers un côté de réactif de celui-ci.

9. Usine selon l'une quelconque des revendications précédentes, dans laquelle l'appareil est raccordé à une source de méthanol et d'oxygène.

10. Usine selon l'une quelconque des revendications précédentes, dans laquelle le lit de catalyseur comprend un catalyseur à base d'argent.

11. Procédé consistant à effectuer une réaction catalytique dans lequel du formaldéhyde est formé consistant à approvisionner une usine selon l'une quelconque des revendications 1 à 10, et les étapes consistant à ;
i) passer un ou plusieurs réactifs le long de la conduite d'amenée de réactif et à travers l'entrée de réactif vers le lit de catalyseur
ii) mettre en contact l'un ou plusieurs réactifs avec le lit de catalyseur pour former un produit ;
iii) mettre en contact le produit de l'étape ii) avec la partie de bobine du tube d'échange de chaleur à travers lequel s'écoule le milieu d'échange de chaleur.

12. Procédé selon la revendication 11, dans lequel du formaldéhyde est formé, comprenant les étapes consistant à ;
i) passer au moins une source de méthanol et une source d'oxygène le long de la conduite d'amenée de réactif et à travers l'entrée de réactif;
ii) mettre en contact une source de méthanol et une source d'oxygène avec le lit de catalyseur, dans lequel le catalyseur consiste en un lit de catalyseur à base d'argent à une température comprise entre 550 et 700° C ;
iii) mettre en contact le produit de l'étape ii) avec la partie de bobine du tube d'échange de chaleur.
